# EUROPEAN PATENT SPECIFICATION

(11) **EP 3 470 798 B1**
(45) Date of publication and mention of the grant of the patent: **04.11.2020**
(21) Application number: 18193468.8
(22) Date of filing: 10.09.2018
(51) Int. Cl.: G01D 21/00, G01P 13/00

(54) **HYDRAULIC CYLINDER COMPRISING A TRANSDUCER AND MACHINE COMPRISING THE HYDRAULIC CYLINDER**
HYDRAULIKZYLINDER MIT EINEM MESSWANDLER UND MASCHINE MIT DEM HYDRAULIKZYLINDER
CYLINDRE HYDRAULIQUE COMPRENANT UN TRANSDUCTEUR ET MACHINE COMPRENANT LE CYLINDRE HYDRAULIQUE

(30) Priority: 11.10.2017 IT 201700114459
(43) Date of publication of application: 17.04.2019
(73) Proprietor: OGNIBENE POWER S.P.A., 42124 Reggio Emilia (IT)
(72) Inventor: OGNIBENE, Claudio, 42121 REGGIO EMILIA (IT)
(74) Representative: Corradini, Corrado

(56) References cited:
- GB-A- 2 288 240
- US-A- 6 109 102
- US-A1- 2006 043 963
- US-A1- 2009 278 711
- US-B1- 6 542 847

## Description

### TECHNICAL FIELD

The present invention relates to the field of sensors. The present invention relates to a sensor capable of providing diagnostic information. More specifically, the present invention relates to a sensor with diagnostic capacities.

### PRIOR ART

As is known, transducers comprising one or more sensors are widely used in systems for managing various devices and apparatuses (for example, from industrial plants to mobile telephones) to acquire information concerning a physical quantity (for example, a trend over time thereof) and to transform such information into signals, for example electric, used by a control unit (for example an ECU of a vehicle) of the management system in order to allow an efficient, and possibly automated, operation of the apparatus.

For example, transducers are known suitable for identifying a movement of a body capable of varying the physical quantity that can be observed by the sensor. In particular, one or more transducers may be implemented in hydraulic cylinders to assess a stroke speed and/or position of the piston in the cylinder. In the technique, it is known to use transducers provided with optical sensors suitable for detecting the transit of a surface portion, or band, of the rod having a different reflectivity from the rest of the surface of the rod. Alternatively, the transducer may comprise a magnetometer suitable for detecting a variable magnetic field induced by a magnet mounted on the rod or on the piston (for example, thanks to Hall effect).

The Applicant has noted that the wear to which the bodies, such as the rod and/or a piston (or portions thereof) of the hydraulic cylinder, is subjected may alter the ability of the body to vary the physical quantity and therefore make inaccurate the information provided by the transducer.

US2009278711 discloses a system for detecting the speed of rotation of a wheel having a sensors group comprising an encoder permanently connected to the wheel, two magnetic field sensors grouped in a single magnetic field sensor module, and an electronic control unit, wherein said magnetic field sensors generate a signal which can be indicative of the correct functioning of the magnetic sensors themselves.

US6109102 discloses a sensor unit comprising a first sensor for detecting the rotational speed of a wheel and a second sensor for detecting wear of a brake by means of contact pins.

US6542847 discloses a sensor system comprising a first sensor adapted for generating a signal providing information about the rotation of a wheel of an encoder, a second sensor adapted for generating a signal providing information about an air slot between the first sensor and the rotating wheel of the encoder in order to detect vibrations problems and installation errors. US2006043963 discloses a magnetic transductor comprising magnetic sensors adapted for generating a signal providing information about the movement of a toothed wheel, about a temperature of the toothed wheel and about a direction of rotation of said toothed wheel.

GB2288240 discloses a device for detecting the position of a control element comprising a cylinder, a piston, a rod coupled to the piston and a transducer adapted for measuring the movement of the rod.

It is an object of the present invention to overcome the mentioned drawbacks of the known technique, within the scope of a simple, rational and affordable solution.

It is a further object of the present invention to provide an indication relative to the wear, and/or the remaining useful life, of the body such as the rod and/or the piston (or portions thereof) of the hydraulic cylinder, without increasing a complexity of the transducer and of a device, such as a hydraulic cylinder, to which the transducer is mounted.

It is again a further object of the present invention to provide a control unit connected to the transducer with the indication relative to the wear of the body using an extremely low number of communication channels, preferably exploiting a single channel.

It is another object of the present invention to provide a transducer suitable for use in old apparatuses without the need to implement retrofitting expedients. In other words, the transducer can be coupled to old devices in an extremely simple manner.

Such objects are achieved by the features of the invention set forth in the independent claim. The dependent claims outline preferred and/or particularly advantageous aspects of the invention.

### DESCRIPTION OF THE INVENTION

In accordance with the invention, a transducer comprises a sensor, a control circuit and an output terminal. The control circuit is operatively connected both to the sensor and to the control terminal. The sensor is suitable for detecting a variation of a physical quantity induced by a movement of a body within a monitoring region of the sensor and for measuring said physical quantity. The control circuit is suitable for generating a first signal indicative of a detection duration of said variation and a second signal indicative of said measurement. Moreover, the control circuit is suitable for combining the first signal and the second signal into an aggregate signal and for transmitting it through the output terminal.

Thanks to such solution there is a transducer capable of providing information on the movement and/or position of the body and at the same time, capable of providing diagnostic information referring to the monitored body, in particular concerning a wear and/or a residual useful life of the body. Moreover, the indication of the state of wear may be exploited for assessing an ability of the sensor to detect the variation of the physical quantity in a reliable manner.

In one embodiment, the control circuit is suitable for generating the first signal which is variable between a first value associated with the detection of the variation of the physical quantity and a second value associated with the non-detection of the variation thereof. Preferably, the control circuit combines the second signal with the first signal at the second value.

Thanks to such solution, it is possible to transmit both signals on the line by means of a simple combination thereof, such as a sum, and at the same time to avoid interferences or distortions between the signals.

In one embodiment, the control circuit generates the second signal comprising pulses having amplitude corresponding to the difference between the first value and the second value.

Thanks to such solution, it is possible to obtain a signal given by the uniform combination of the first and second signal and that be processed in a simpler manner by a control unit connected to the output terminal.

In one embodiment, the control circuit generates the second signal comprising a predetermined sequence of pulses.

Thanks to such solution, it is possible to convey information in the second signal in a simple and effective manner.

In one embodiment, the control circuit generates the second signal with the sequence of pulses indicative of the measurement of a predetermined value of the physical quantity.

Thanks to such solution, it is possible to identify the reaching, or the non-reaching, of a predetermined value of the variation in an extremely simple and effective manner. In other words, it is possible to indicate the occurrence of a condition associated with the measured value of the variation in an extremely simple and effective manner.

In one embodiment, the control circuit generates the second signal comprising two or more replicas of the sequence of pulses.

Thanks to such solution, a detection of the information contained in the second signal by a control unit connected to the output terminal is simplified. In one embodiment, the control circuit generates the second signal having an associated energy which is lower than a predetermined threshold value. Thanks to such solution, it is possible avoiding to inappropriately energize electric and/or electromechanical components coupled to the output terminal of the transducer.

In one embodiment, the sensor comprises one between an optical sensor and a magnetometer.

Thanks to such solution, it is possible to implement a monitoring of the movement of a body in a simple and effective manner.

The invention provides a hydraulic cylinder comprising a cylinder, a piston, a rod rigidly coupled to the piston, and a transducer as described above. The transducer detects the variation of a physical quantity associated with a movement of the coupled rod and piston. Thanks to such solution, it is possible to provide indications on the wear and/or a remaining useful life of the coupled rod and piston, together with indications on the speed and/or position thereof.

In one embodiment, the transducer comprises an optical sensor and the rod comprises a first portion having a first reflectivity, and a second portion having a second reflectivity. Preferably, the optical sensor is suitable for detecting the variation of light intensity reflected by the rod which is movable within the monitoring region of the sensor. Even more preferably, the control circuit generates the first signal indicative of the movement of the rod and generates the second signal indicative of a state of wear of the rod.

Thanks to such solution, it is possible to obtain indications on the wear and/or on the remaining useful life of the rod of the hydraulic cylinder. The hydraulic cylinder is reliable and allows forecasting the need for maintenance and/or replacing components.

In one embodiment, the transducer comprises a magnetometer and the piston comprises a magnet. Preferably, the magnetometer is suitable for detecting the variation of magnetic field intensity induced by the movement of the magnet within the monitoring region of the sensor. Even more preferably, the control circuit generates the first signal indicative of the movement of the piston and generates the second signal indicative of a state of wear of the magnet.

Thanks to such solution, it is possible to obtain indications on the wear and/or on the remaining useful life of the magnet coupled to the piston of the hydraulic cylinder.

Another aspect of the invention provides a machine comprising the above hydraulic cylinder.

Due to such solution, it is possible to obtain a reliable machine that allows forecasting the need for maintenance and/or replacing components.

Due to such solution, a procedure is provided that may be implemented in a sensor suitable for providing diagnostic indications referring to a body monitored by the sensor, in particular it concerns a wear and/or a residual useful life of the body.

### BRIEF DESCRIPTION OF THE DRAWINGS

Further features and advantages of the invention will be more apparent after reading the following description provided by way of a non-limiting example, with the aid of the accompanying drawings.

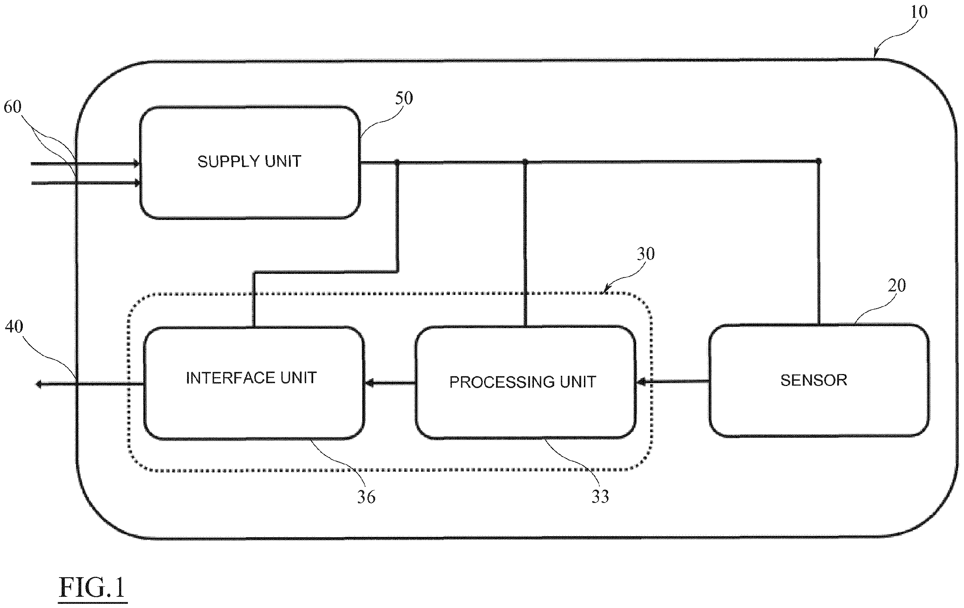

Figure 1 is a principle block diagram of a transducer according to embodiments of the present invention.
Figure 2A is an axonometric view of a hydraulic cylinder in which it is possible to implement the transducer according to one embodiment of the invention.
Figure 2B is a side section view of the hydraulic cylinder of Figure 2A.
Figure 3A is an axonometric view of an alternative hydraulic cylinder in which it is possible to implement the transducer according to an alternative embodiment of the invention.
Figure 3B is a side section view of the hydraulic cylinder of Figure 3A.
Figure 4 is a diagram of the trend over time of different signals generated by the transducer according to embodiments of the present invention, as a function of time.
Figures 5A-5C are enlarged views of respective portions of the diagram of

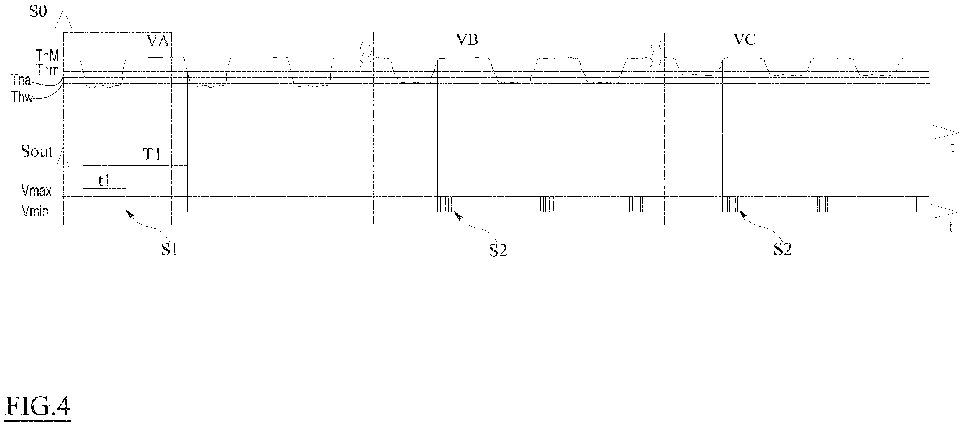

Figure 4, each referring to a different condition detected.

### BEST MODE FOR IMPLEMENTING THE INVENTION

With particular reference to such drawings, a transducer according to embodiments of the present invention is indicated as a whole with 10.

The transducer 10 comprises a sensor 20, a control circuit 30 and an output terminal 40, or an input/output terminal.

The sensor 20 is suitable for detecting and providing an indication of the trend over time of physical quantity, or at least a variation of the physical quantity, indicated simply also as "variation" below. Non-limiting examples of the sensor 20 comprise an optical sensor and a magnetometer.

In the embodiment considered, the control circuit 30 comprises a processing unit 33 and an interface unit 36. Even more preferably, the processing unit comprises one or more processing components (not shown in the drawings), for example a microprocessor, a microcontroller, a Digital Signal Processor or DSP, etc., and one or more storage elements (not shown in the drawings), for example volatile and/or non-volatile storages such as a random-access memory or RAM, and erasable storage and an electrically erasable storage or EEPROM, a look-up table, etc. Differently, the interface unit 36 may comprise one or more circuit arrangements or conditioning components for electric signals - for example, filters, pull-up/pull-down networks, amplifiers, etc.

Additionally, the transducer 10 may comprise a supply unit 50 and one or more, typically a pair of, supply terminals 60.

In the example illustrated, the control circuit 30 is operatively connected to the sensor 20 and to the output terminal 40. Preferably, the sensor 20 is operatively coupled to the processing unit 33, while the latter is operatively coupled to the output terminal 40 through the interface unit 36.

The supply unit 50 is operatively coupled to the supply terminals 60, to the sensor 20 and to the control circuit 30.

Preferably, the sensor 20 is designed to detect a physical quantity, i.e. to detect a value or at least a variation thereof, within a monitoring region of the sensor and to provide a sensor signal *S0* indicative of a trend of the physical quantity, or of the variation thereof, as a function of time.

The control circuit 30 is suitable for receiving the sensor signal *S0* and for generating a corresponding first signal *S1* indicative of a variation of the physical quantity as described below.

In the solution according to embodiments of the present invention, the control circuit 30 is also suitable for measuring the value of the physical quantity, or the variation thereof, and for generating a second signal *S2* indicative of such measurement. Preferably, the control circuit determines a reaching and/or non-reaching of one or more predetermined values by the sensor signal *S0*, for example one or more threshold values (as described below), and generates a second signal S2 indicative of such reaching and/or failure to reach the threshold values.

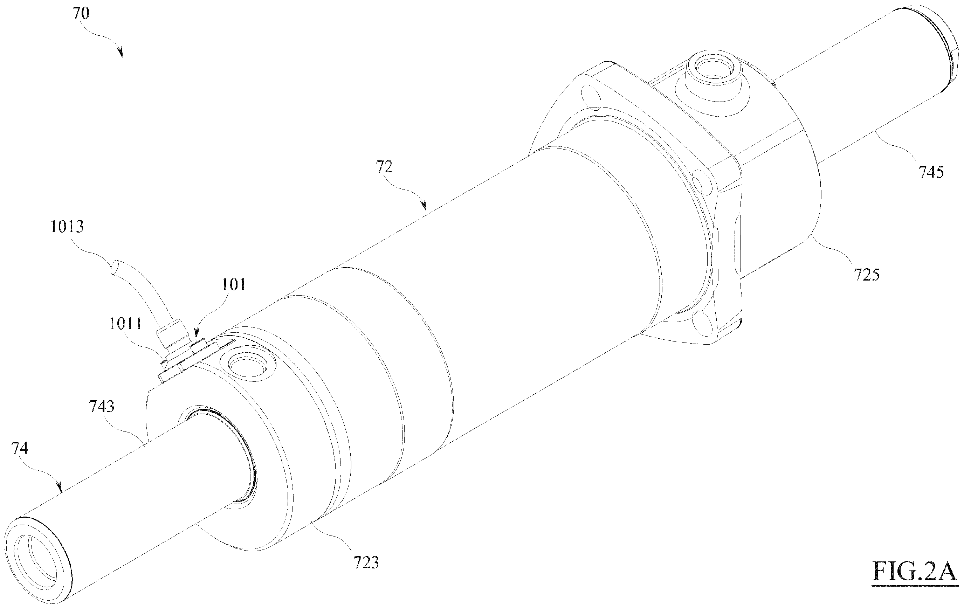

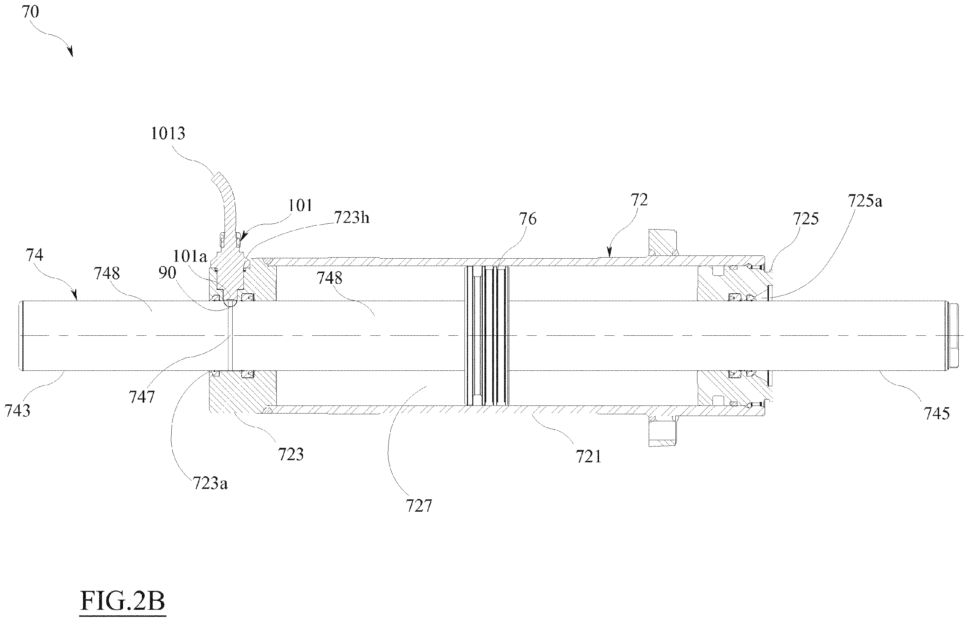

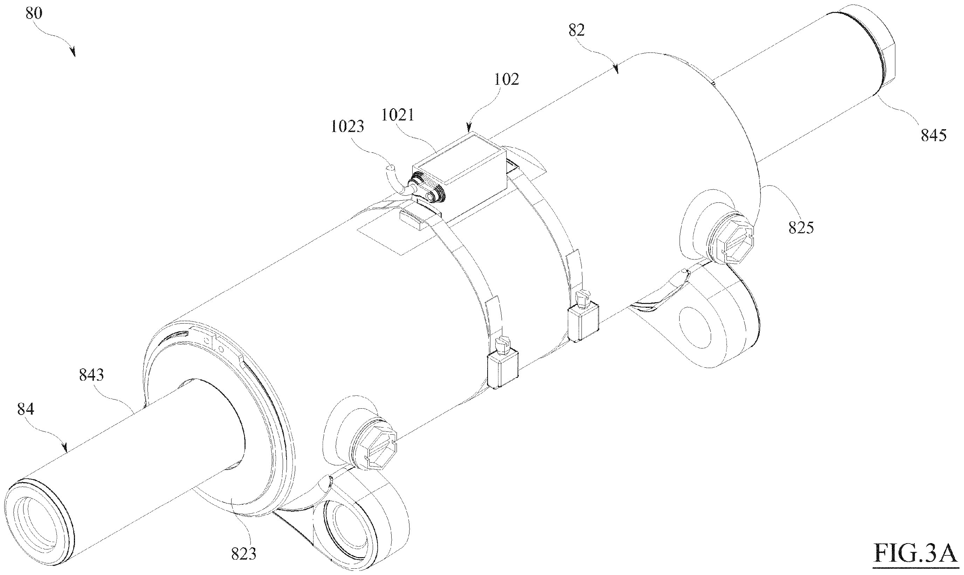

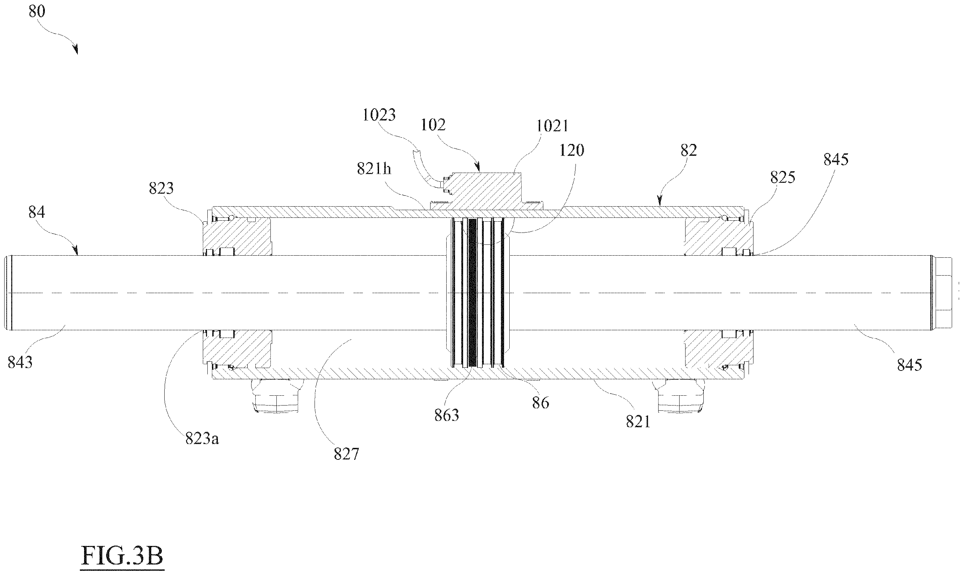

The transducer may be implemented in a hydraulic cylinder such as a (first) hydraulic cylinder 70 of Figures 2A and 2B and a (second) hydraulic cylinder 80 of Figures 3A and 3B.

In detail, the hydraulic cylinder 70 comprises a cylinder 72, a rod 74, a piston 76 and the transducer 10.1.

In the example in Figures 2A and 2B, the cylinder 72 preferably comprises a hollow cylindrical body 721 and a pair of heads 723 and 725. The heads 723 and 725 are coupled to the cylindrical body 721 to delimit a cavity or inner chamber 727 of the cylinder 72. The piston 76 is slidingly housed in the cavity 727 of the cylinder 72.

The rod 74 is rigidly coupled to the piston 76. In particular, the rod 76 is slidingly coupled to one or both the heads 723 and 725 of the cylinder. In the example in Figures 2A and 2B, the rod 74 is a double rod and comprises a first rod element 743 and a second rod element 745 axially coupled to the piston 76 on opposite faces thereof. Moreover, each one of the heads 723 and 725 comprises a respective through hole 723a and 725a suitable for slidingly receiving the rod elements 743 and 745, respectively.

One of the heads, the head 723 in the example in Figures 2A and 2B, comprises a housing 723h suitable for receiving the transducer 10.1. Advantageously, the housing 723h is shaped so as to receive the transducer 10.1 with an acquiring portion 10.1 a thereof facing the through hole 723a. The sensor 20 of the transducer 10.1 comprises an optical sensor. For example, the acquiring portion 10.1a of the sensor 10.1 comprises a photosensitive element of the sensor 20 oriented towards a centre of the through hole 723a. In other words, the transducer 10.1 is arranged in the housing 723h so as to define a monitoring region 90 comprising at least one part of the through hole 723a of the head 723. In particular, the monitoring region 90 is crossed by the rod 74, in the example in Figures 2A and 2B by the rod element 743 (that is, the rod element 734 engages the sensor 20).

In the solution according to the embodiment in Figures 2A and 2B, the rod 74 comprises a first surface portion 747, for example a band or notch, having a first reflectivity *R1,* and a second surface portion 748, for example the rest of the surface of the rod to 74, having a second reflectivity *R2.* The first surface portion 747 is formed by the rod element 743 which crosses the monitoring region 90 of the sensor 10.1. Preferably, the first surface portion 747 has a predetermined extension along an axial direction of the rod 74, which is substantially lower than an extension of the second surface portion 748 along the axial direction of the rod 74.

Preferably, the transducer 10.1 comprises a casing 10.11 suitable for protecting and isolating the electric and electronic components of the transducer from the external environment. Additionally, the transducer 10.1 comprises a connection wiring 10.13. For example, the connection wiring comprises a pair of supply cables (not shown in detail in the drawings) connected to the supply terminals 60 of the transducer 10.1 and a data cable (not shown in detail in the drawings) connected to the output terminal 40. Similarly, the hydraulic cylinder 80 comprises a cylinder 82, a rod 84, a piston 86 and the transducer 10.2.

In the example in Figures 3A and 3B, the cylinder 82 preferably comprises a hollow cylindrical body 821 and a pair of heads 823 and 825. The heads 823 and 825 are coupled to the cylindrical body 821 to delimit a cavity or chamber 827 of the cylinder 82. The piston 86 is slidingly housed in the cavity 827 of the cylinder 82.

The rod 84 is rigidly coupled to the piston 86. In particular, the rod 86 is slidingly coupled to one or both the heads 823 and 825 of the cylinder 82. In the example in Figures 3A and 3B, the rod 84 is a double rod and comprises a first rod element 843 and a second rod element 845 axially coupled to the piston 86 on opposite faces thereof. Moreover, each of the heads 823 and 825 comprises a respective through hole 823a and 825a suitable for slidingly receiving the rod elements 843 and 845, respectively.

The cylindrical body 821 is suitable for receiving the transducer 10.2. For example, the cylindrical body 821 comprises a housing place 821h shaped so as to receive the transducer 10.2 with an acquiring portion 10.2a in contact with the cylindrical body 821. Advantageously, the transducer 10.2 may be fixed to the cylindrical body 821 by means of suitable fixing means, for example a pair of straps 110.

The sensor 20 of the transducer 10.2 comprises a magnetometer. For example, the acquiring portion 10.2a of the sensor 10.1 comprises a detection portion of the sensor 20, that is a portion of the magnetometer sensitive to magnetic fields, oriented towards a centre of the cylindrical body 821. In other words, the transducer 10.2 is arranged in the housing place 821h so as to define a monitoring region 120 comprising at least one part of the cavity 827 of the cylinder 82. In particular, the monitoring region 120 is crossed by the piston 86 during the travel thereof in the cavity 827 of the cylinder 82.

Preferably, the transducer 10.2 comprises a casing 10.21 suitable for protecting and isolating the electric and electronic components of the transducer from the external environment. Additionally, the transducer 103 comprises a connection wiring 10.23. For example, the connection wiring 10.23 comprises a pair of supply cables (not shown in detail in the drawings) connected to the supply terminals 60 of the transducer 10.2 and a data cable (not shown in detail in the drawings) connected to the output terminal 40.

In the solution according to the embodiment in the Figures 3A and 3B, the piston 86 comprises a magnetic element 863, for example a ferrite ring.

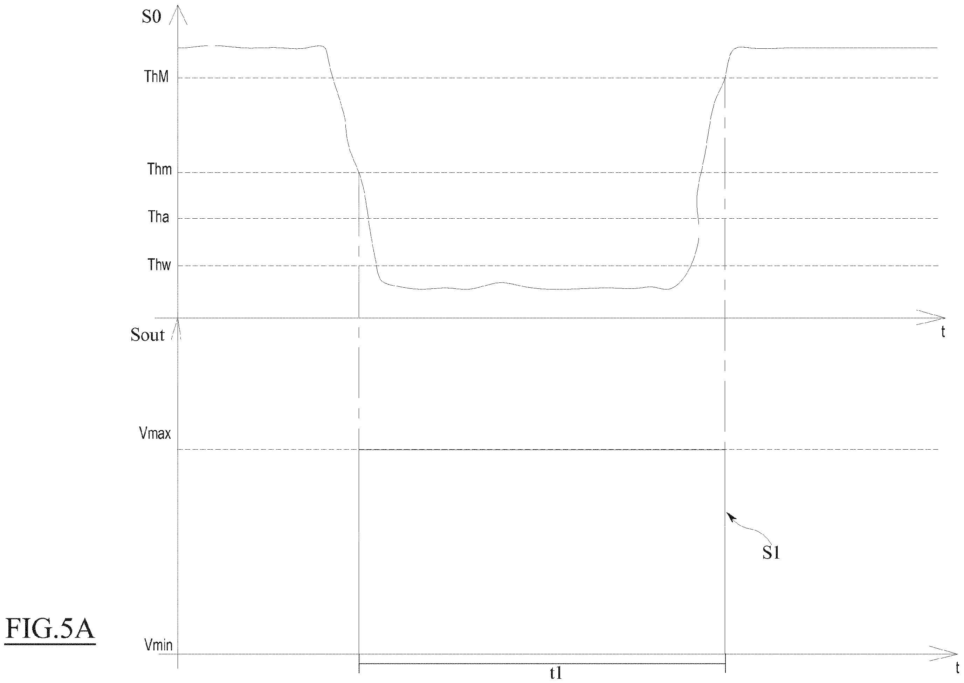

In the solution according to embodiments of the present invention, the control circuit 30, in particular the processing unit 33, implements a procedure, or a method, for generating the aggregate signal *Sₒᵤₜ.* For example, a sequence of instructions are saved in the processing unit 33 (for example, in a non-volatile memory). In light of that described above, and with particular reference to Figures 4 and 5A-5C, the operation of the transducer 10 is the following. The sensor 20 detects the trend over time of the physical quantity in the monitoring region and generates the corresponding sensor signal *S0,* preferably proportional to the physical quantity. Preferably, the sensor 20 periodically or continuously detects the trend over time of the quantity, for example in response to receiving an enabling signal provided by the control circuit 30 at the receipt of an enabling signal.

The sensor 20 has a sensitivity suitable for detecting values, or variations, of the physical quantity within a sensitivity range and for generating the sensor signal *S0* with an amplitude proportional to the value, or variation, detected. In other words, the sensor signal S0 has a trend (over time) which replicates the trend over time of the physical quantity. In the example in Figures 4 and 5A-5C, the engagement and the disengagement of the body with the sensor 20 induce variations in the trend over time of the physical quantity which are reflected in a substantially step variation in the sensor signal *S0* having a duration in time *t0* equal to the duration of the engagement of the body with the sensor. In the example at issue, when the body does not engage the sensor 20, the values detected by the sensor define a first average value for the sensor signal S0, while when the body engages the sensor 20, the values detected define a second average value for the sensor signal S0, with the first average value different from the second; in the example in the Figures 4 and 5A-5C, the first average value is greater than the second average value. For example, in the case of the transducer 10.1 in Figures 2A and 2B, the sensor 20 (optical sensor) detects a reflected light intensity; or variations thereof, from a portion of rod element 743 which transits in the monitoring region 90 of the sensor 20 during the sliding of the rod 74. Differently, in the case of the transducer 10.2 of Figures 3A and 3B, the sensor 20, i.e. a magnetometer, detects an intensity of the magnetic field, or variations thereof, in the monitoring region 120 disturbed by the passage of the magnet 863 in, or close to, the monitoring region 120.

In the considered embodiment, the sensor is therefore suitable for generating an electric signal *S0* which is variable over time (or in frequency) with an amplitude and a trend over time (or in frequency) based on, for example proportional to, a value and a trend over time (or in frequency) of the value of the physical quantity.

The control circuit 30 is suitable for receiving the electric signal *S0* generated by the sensor 20 and for processing it to generate one or more derived electric signals. In particular, the control circuit 30 generates a first signal S1 (electric) indicative of a detection duration of the variation of the electric signal *S0* (corresponding to the variation of the physical quantity). Additionally, the control circuit 30 generates also a second signal S2 (electric) indicative of a measurement of the physical quantity and/or of the variation thereof.

In the solution according to embodiments of the present invention, the control circuit 30 is suitable for combining the first signal *S1* and the second signal S2 into an aggregate signal *Sₒᵤₜ*.

Advantageously, the aggregate signal *Sₒᵤₜ.* is then transmitted through the output terminal 40. For example, the aggregate signal *Sₒᵤₜ* is transmitted to a control unit (not shown in the drawings, such as an ECU of the vehicle) connected to the transducer 10. In other words, the first signal *S1* and the second signal *S2* are transmitted together through a single physical communication channel, for example the electric cable connected to the output terminal 40.

Preferably, the control circuit 30 of the transducer 10 is suitable for generating the first signal S1 so that it varies between a first signal value, associated with the detection of the variation, and a second signal value, associated with the non-detection of the variation.

For example, the first signal S1 is a square wave, or digital signal that takes on a "high" value *Vmax* (for example, a value equal to the supply voltage or a logic one) when the variation is detected and a "low" value *Vmin* (for example, a value equal to the reference earth voltage or a logic zero).

In the example considered, the first signal *S1* is kept at a high value *Vmax,* in order to signal the reaching, or the crossing, of a predetermined value of the sensor signal *S0* (that is, the physical quantity or the variation). In the example considered, the control unit generates the first signal S1 with high value *Vmax* while the signal *S0* has a value which is lower than a threshold value, i.e. a variation is detected of the value of the physical quantity with respect to a base value thereof. For example, the base value for the transducer 10.1 is the average (or alternatively, peak, minimum, etc.) value of the light intensity reflected by the second surface portion 748 of the rod 74. Differently, the base value for the transducer 10.2 is the average (or alternatively, peak, minimum, etc.) value of the magnetic field in the monitoring region 120 unperturbed by the magnet 863.

Preferably, the processing unit 33 of the control circuit 30 implements a hysteresis during the generation of the first signal S1. In other words, the first signal S1 is kept at a high value *Vmax as* long as the signal *S0*, received by the processing unit 33 sent by the sensor 20, has a value comprised between a minimum threshold value *Thm* and a maximum threshold value *ThM.* For example, the processing unit 33 switches the first signal *S1* from the low value to the high value when the value S0 is lower than or equal to a minimum threshold value *Thm* - i.e. a variation of the signal *S0* (corresponding to a variation of the physical quantity) is equal to or greater than a corresponding first threshold value (equal to the difference between base value and minimum threshold value *Thm*)*.* Differently, the switching unit 33 switches the first signal *S1* from the high value *Vmax* to the low value *Vmin* when the signal S0 is greater than or equal to a maximum threshold value *ThM,* greater than the minimum threshold value *Thm* - i.e. the variation of the signal *S0* is equal to or lower than a corresponding second threshold value (equal to the difference between the base value and the maximum threshold value *ThM*).

For example, in the case of the transducer 10.1 (comprising a sensor 20 of optical type), the sensor 20 detects a value, or a variation, of light intensity during the passage of the first surface portion 747 of the rod 74 through the monitoring region 90, i.e. when the first surface portion 747 engages the sensor and generates the sensor signal *S0* based on such detection. Preferably, the trend over time of the amplitude of the sensor signal *S0* generated by the sensor 20 is proportional to the light intensity reflected by the surface of the rod 74 that transits in the monitoring region 90.

Differently, in the case of the transducer 10.2 (comprising a sensor 20 of magnetic type), the sensor 20 detects an intensity, or a variation of intensity, of magnetic field during the passage of the magnet 863 through the monitoring region 120, i.e. when the magnet engages the sensor 20, and generates the sensor signal *S0* based on such detection. Preferably, the trend over time of the amplitude of the sensor signal *S0* generated by the sensor 20 is proportional to the variation of magnetic field induced by the transit of the piston 86, comprising the magnet 863, in the transition region 120.

The first signal S1 generated by the processing unit 33 of the transducer 10.1 or 10.2 substantially is a square wave signal, with a period *T1* (intended as time elapsing between two rising edges of the square wave) indicative of the, for example proportional to the, stroke speed of the piston 76 or 86 in the cylinder 72 or 82, respectively. In other words, period *T1* in general is of variable amplitude as a function of the stroke speed of the piston 76 or 86. Moreover, the first signal S1 allows counting the number of work cycles, or strokes, of the piston 76 or 86 inside the cylinder 72 or 82, respectively, based on the period *T1* of the first signal *S1,* in particular based on the number of consecutive periods *T1* during an observation time interval (possibly the whole useful life of the hydraulic cylinder 70 or 80). The control circuit 30 of the transducer 10 is suitable for generating, for example in parallel to the generation of the first signal S1, the second signal S2 indicative of a value, or variation measured, of the physical quantity. For example, the second signal S2 is indicative of a value of the variation with respect to the base value.

In particular, the Applicant has noted that a reduction of the sensor signal S0 (corresponding to a value, or a variation, of the physical quantity) to a value equal to or lower than one or more predetermined threshold values may be associated with a wear of the body monitored by the sensor 20 of the transducer 10. The Applicant has also noted that it is possible to take advantage of the transducer 10 to provide an indication of a state of wear, and therefore a remaining useful life, of the monitored body.

In the solution according to embodiments, the control circuit 30 generates the signal S2 comprising one or more pulses. Preferably, the control circuit 30 generates the second signal S2 comprising a predetermined sequence of pulses. Advantageously, the sequence of pulses is indicative of the measurement of a predetermined value of the variation. For example, the control circuit 30 generates the second signal *S2* comprising pulses having amplitude equal to the high value *Vmax* of the first signal *S1,* that is the second signal S2 has the same swing as the first signal S1.

In the example in Figures 4 and 5A-5C, the control circuit 30 is suitable for generating the signal S2 comprising a first train (or sequence) of pulses *st1* associated with the measurement of a value, or of a variation, of the sensor signal *S0* (and therefore, of a corresponding value, or of a variation, of the physical quantity) equal to or lower than a predetermined value. This reduction is for example, indicated by the sensor 20 by means of a signal *S0* with minimum value equal to or greater than a warning threshold *Thw.*

For example, in the case of the transducer 10.1, the Applicant has noted that the reduction of the sensor signal *S0* to a value equal to or lower than the warning threshold *Thw* corresponds to an increase of the reflectivity of the first surface portion 747 and/or a reduction of reflectivity of the second surface portion 748 of the rod 74. In particular, the Applicant has noted that such degradation of reflectivity is linked with a wear of the rod 74. The Applicant has also noted that it is possible to take advantage of the transducer 10.1 to provide an indication of a state of wear, and therefore of a remaining useful life, of the rod 74.

Differently, in the case of the transducer 10.2, the Applicant has noted that the reduction of the sensor signal *S0* to a value equal to or lower than the warning threshold *Thw* corresponds to a reduction of the intensity of the magnetic field generated by the magnet 863. In particular, the Applicant has noted that such variation of degradation of the magnetic field intensity is linked to a wear of the magnet 863 mounted on the piston 86 due to high temperatures reached inside the cavity 827 and by possible lubricants used therein. The Applicant has also noted that it is possible to take advantage of the transducer 10.2 to provide an indication of a state of wear, and therefore of a remaining useful life, of the magnet 863 and advantageously of the piston 86.

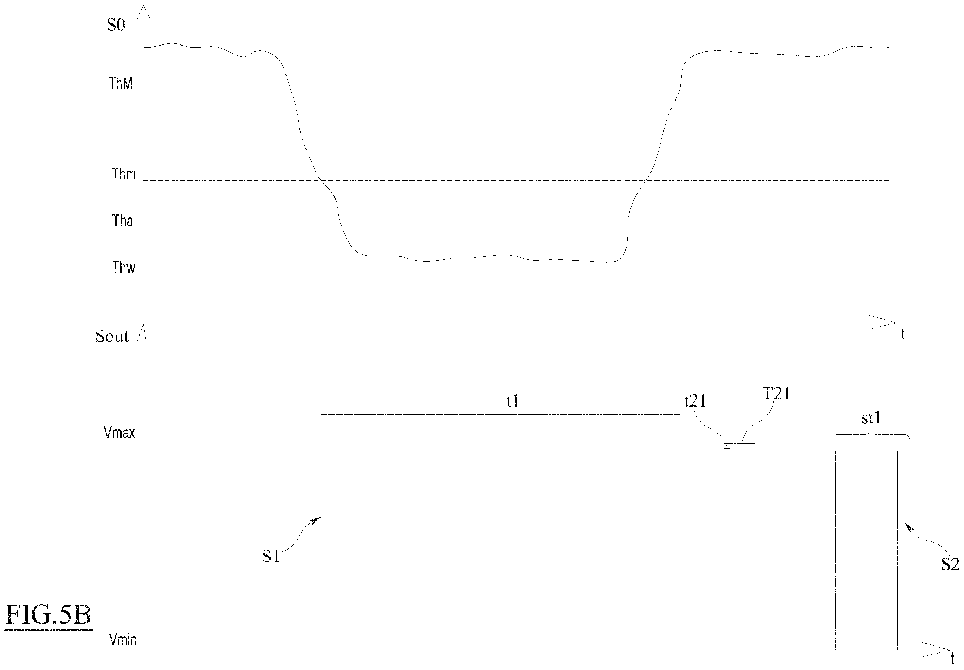

With reference to Figure 5B, the train of pulses *st1* comprises three separate pulses emitted with a frequency *T2.1.* Preferably, the first pulse of the train *st1* is a header pulse suitable for allowing the recognition by the control unit connected to the transducer 10, of the signal *S2* in the aggregate signal *Sₒᵤₜ*. Differently, the two successive pulses code the indication of the failure in crossing the warning threshold *Thw.*

Additionally, the control circuit 30 is suitable for generating the signal S2 comprising a second train (or sequence) of pulses *st2* associated with the measurement of a variation equal to or lower than a further predetermined value, for example close to a end of life (or failure) of the monitored body. This reduction is for example, indicated by the sensor 20 by means of a signal *S0* with minimum value equal to, or greater than, an alarm threshold *Tha,* which is greater than the warning threshold *Thw.*

For example, in the case of the transducer 10.1, the Applicant has noted that the reduction of the sensor signal *S0* to a value equal to or lower than the alarm threshold *Tha* corresponds to a further increase of the reflectivity of the first surface portion 747 and/or a reduction of reflectivity of the second surface portion 748 of the rod 74, which is indicative of a greater wear of the rod 74 with respect to the one associated with the warning threshold *Thw.* Differently, in the case of the transducer 10.2, the reduction of the variation of the alarm threshold *Tha* corresponds to a further reduction of the intensity of the magnetic field generated by the magnet 863, which is indicative of a greater wear of the magnet 863 with respect to the one associated with the warning threshold *Thw.*

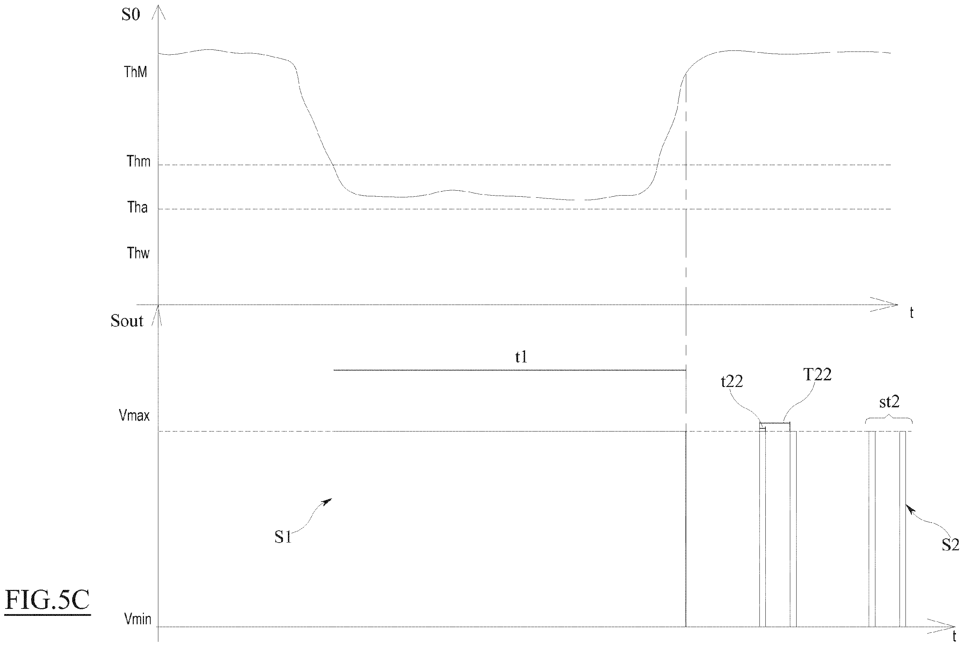

With reference to Figure 5C, the train of pulses *st2* comprises two separate pulses emitted with a frequency T2. Preferably, the first pulse of the train *st2* is a header pulse suitable for allowing the recognition by the control unit connected to the transducer 10, of the signal S2 in the aggregate signal *Sₒᵤₜ*. Differently, the single successive pulse codes the indication of the failure in crossing the alarm threshold *Tha.*

In one embodiment, the control circuit 30 combines the second signal S2 with the first signal S1 at the second value, the low value in the example in Figures 4A-4C, in order to generate the aggregate signal *Sₒᵤₜ.* In other words, the second signal S2 is combined, for example added, to the first signal S1 at portions thereof indicative of an absence of variation. Thereby, it is possible to avoid distorting the signal S1 when at high value *Vmax* or otherwise altering the interpretation of the aggregate signal *Sₒᵤₜ* by a control unit coupled to the output terminal.

Preferably, the control circuit 30, in particular the processing unit 33, is configured in the following manner. For example, the processing unit 33 stores one or more instruction sets, for example firmware or software instructions recorded in a non-volatile storage, suitable for being implemented by the processing components comprised in the processing unit 33.

When the processing unit 33 determines a value of the sensor signal *S0* lower than the minimum threshold, the processing unit 33 switches the first signal *S1* from the low value *Vmin* to the high value *Vmax.* The first signal S1 is maintained at the high level *Vmax* for a time interval *t1* equal to the time interval in which the processing unit 33 determines a value of the sensor signal *S0* greater than the maximum threshold *ThM.* Accordingly, the processing unit 33 switches the first signal *S1* from the high value *Vmax* to the low value *Vmin.* In other words, the processing unit 33 keeps the first signal *S1* at the high value Vmax so long as the body engages the sensor 20. Simultaneously, the processing unit 33 verifies the failure in crossing both of both the warning *Thw* and alarm *Tha* thresholds by the signal *S0* during the time interval *t1,* that is when the body engages the sensor 20.

In the considered scenario, three conditions may occur. In the first condition (illustrated in Figure 5A), the sensor signal *S0* is lower than both the warning and alarm *Thw* and *Tha* thresholds, i.e. both the thresholds *Thw* and *Tha* were crossed by the sensor signal *S0*. Accordingly, the processing unit 33 does not generate a second signal *S2,* or generates a null signal S2, and the aggregate signal *Sₒᵤₜ* substantially comprises only the first signal S1.

In the second condition (illustrated in Figure 5B), the sensor signal *S0* is greater than the alarm threshold *Tha* but not than the warning threshold *Thw.* In other words, only the alarm threshold *Tha* is crossed by the signal *S0*. Accordingly, the processing unit 33 generates the second signal S2 comprising the first train of pulses *st1.* The processing unit 33 generates the aggregate signal *Sₒᵤₜ* by combining, for example by adding, the first signal S1 with the second signal *S2.*

Preferably, the second signal S2 is combined, for example added, with the first signal *S1* following a corresponding indication of the variation of the sensor signal *S0*. In the example in Figure 5B, the aggregate signal *Sₒᵤₜ* comprises the second signal S2 downstream of a falling edge from a high value *Vmax to* a low value *Vmin* of the first signal *S1,* that is with the signal S1 at low value *Vmin,* but before a successive rising edge of the first signal *S1.* In other words, the second signal S2 is contained in a portion of the period *T1* with the first signal *S1* at low value (i.e., a portion of extent equal to *T1* - *t1*).

Advantageously, the second signal S2 follows the indication of variation in the first signal S1 with a predetermined delay τ. Thereby, a simplified detection of the second signal S2 is achieved by the control unit coupled to the output terminal 40.

In one embodiment, the control circuit 30, in particular the processing unit 33, combines the first signal *S1* with two or more replicas of the second signal *S2,* for example two or more replicas of the first train of pulses *st1.* Also in this case, the replicas of the second signal *S2* are consecutive to one another and are contained in the portion of first signal *S1* at low value within the signalling period *T1* of the corresponding variation. Even more preferably, each replica of the second signal *S2* is spaced apart by a predetermined time interval, for example each train of pulses *st1* follows the preceding train of pulses *st1* after the predetermined delay τ in the aggregate signal *Sₒᵤₜ*.

In the third condition (illustrated in Figure 5C), the sensor signal *S0* is greater both than the alarm threshold *Tha* and the warning threshold *Thw,* that is both the alarm *Tha* and warning *Thw* thresholds not crossed by the signal *S0*. Accordingly, the processing unit 33 generates the second signal *S2* comprising the second train of pulses *st2.* The processing unit 33 generates the aggregate signal *Sₒᵤₜ* by combining, for example by adding, the first signal *S1* with the second signal *S2.* Preferably, the second signal *S2* is combined, for example added, with the first signal *S1* following the indication of the variation measured in the signal *S0*, i.e. with the sensor signal *S1* at low value *Vmin.* In the example in Figure 5C, the aggregate signal *Sₒᵤₜ* comprises the second signal *S2* downstream of a falling edge from a high value *Vmax to* a low value *Vmin* of the first signal *S1.* Even more preferably, the second signal *S2* follows the indication of variation in the first signal *S1* with a predetermined delay τ.

Also in this case, it is possible to configure the processing unit 33 to combine the first signal *S1* with two or more replicas of the second signal *S2,* for example two or more replicas of the second train of pulses *st2* in similar manner to that described above with reference to the second condition.

The transducer 10 according to embodiments of the present invention is suitable for taking advantage of the detection obtained by the sensor 20 to provide different indications based thereon. Indeed, the first signal *S1* provides an indication of detection of a variation of the physical quantity and of the duration of such detection, which is associated with a crossing of the monitoring region of the sensor 20 by a body. In particular, the first signal *S1* allows assessing a moving speed of the rod/pistons 74/76 and 84/86 of the hydraulic cylinders 70 and 80. Differently, the second signal S2 provides an indication of a measurement of the physical quantity, or of the variation detected, which is associated with an alteration of the body that crosses the monitoring region of the sensor 20. In the case of the transducers 10.1 and 10.2, the second signal S2 allows assessing a condition of the rod 74 or of the magnet 863 of the hydraulic cylinders 70 and 80, respectively.

In particular, the failure in crossing the warning threshold *Thw* allows indicating a level of wear of the rod 74 of the hydraulic cylinder 70 - due to the friction between heads 723 and 725 and rod 74 - or of the magnet 863 of the hydraulic cylinder 80 - due to increased temperatures in the cavity 827, in particular of a lubricant contained therein. The knowledge of the level of wear of the components of the hydraulic cylinder 70 and 80 allows providing an indication on the remaining useful life thereof (for example, in terms of stroke cycles or operating time as a function of the operating speed). Moreover, the failure in crossing the alarm threshold *Tha* allows indicating a level of wear of the rod 74 of the hydraulic cylinder 70 which is greater than the wear indicated by the failure in crossing the warning threshold *Thw,* and therefore allows providing a further indication on the remaining useful life thereof, preferably an indication of a term of the useful life of the hydraulic cylinder 70 (for example, in terms of stroke cycles or operating time as a function of the operating speed).

Advantageously, the combination of the first signal *S1* and of the second signal S2 in the aggregate signal *Sₒᵤₜ* allows the information, i.e. the above-indicated indications of variation and of measurement, to be transferred in an efficient and easily interpretable manner by the control unit that receives the aggregate signal *Sₒᵤₜ*.

In one embodiment of the present invention, the transducer 10 generates the signal S2 after a predetermined level of confidence has been achieved. Thereby, it is possible to avoid false indications of the failure in crossing the warning *Thw* and/or alarm *Tha* threshold and subsequent erroneous wear assessments.

Preferably, the processing unit 33 is configured to storing a count of indications of failures in crossing the warning threshold *Thw* and the alarm threshold *Tha* and to generate a corresponding second signal *S2* only after a predetermined number of crossings the same threshold *Thw* or *Tha* is counted.

For example, the processing unit 33 implements a warning signalling register for storing a number, or counter, of failures in crossing the warning threshold *Thw* and an alarm signalling register for storing a number, or counter, of failures in crossing the alarm threshold *Tha.* Additionally, the processing unit may implement corresponding counters of a time interval expired from the detection of the first failure in crossing the warning threshold *Thw* or of the alarm threshold *Tha,* respectively.

The processing unit 33 of the control circuit 30 is configured to generate the second signal *S2* (in particular, to generate the second non-null signal *S2*) based on the contents of the warning and alarm signal registers.

For example, the processing unit 33 is configured to generate the second signal *S2* if a number of failure in crossing the thresholds *Thw* or *Tha* (preferably, a respective predetermined number is associated with each threshold *Thw* and *Tha*) is detected or recorded in the corresponding register, for example comprised between 20 and 2, such as 10 recordings. In other words, the second signal S2 is generated (non-null) when the physical quantity, or the variation thereof, as indicated by the sensor signal *S0*, does not bypass one or both the thresholds *Thw* or *Tha* at a predetermined number of variations detected consecutively - that is a number of passages of the first surface portion 747 of rod 74 in the monitoring region 90 in the case of the hydraulic cylinder 70 provided with the transducer 10.1, or passages of the magnet 863 of the piston 86 in the monitoring region 120 in the case of the hydraulic cylinder 80 provided with the transducer 10.2.

If a number of consecutive readings lower than the predetermined number is performed, followed by a reading without threshold crossing, the signal counters are zeroed or reset.

Contrarily, when both the counters equal, or exceed, the predetermined number, the processing unit 33 generates the second signal S2 comprising the second train of pulses st2. When only the warning signal counter equals, or exceeds, the predetermined number, the processing unit 33 generates the second signal S2 comprising the first train of pulses *st1.*

In one embodiment, the processing unit 33 is configured to sample the values of the sensor signal *S0* while the variation is detected. For example, the processing unit 33 is configured to acquire a predetermined number of values, for example comprised between 10 and 2, such as 5, of the sensor signal *S0* while the variation is detected (that is, while the first signal *S1* is at the high value). The processing unit 33 is therefore configured to execute an average of the values of the sensor signal *S0* acquired and to increase the warning signal counter if the average value is equal to, or greater than, the warning threshold *Thw,* or to increase the alarm signal counter if the average value is equal to, or greater than, the alarm threshold *Tha* (and therefore also greater than the warning threshold *Thw*).

Advantageously, the processing unit 33 may implement procedures for further increasing a reliability of the warning and alarm signals provided by means of the second signal *S2.*

For example, in one embodiment of the present invention, the processing unit 33 is configured to reject the values of the sensor signal *S0* acquired during the detection of the variation when a difference between a minimum value acquired and a maximum value acquired is lower than a desired minimum difference value. In the case of the hydraulic cylinders 70 and 80, this filtering allows considering valid only detections performed with the rod 74 or the piston 86 in movement, thus eliminating false positives which could result from measurement errors or inaccuracies of the variation at the switching areas between adjacent surface portions 747 and 748 or in edge regions of the magnet 863.

Additionally, the processing unit 33 may be configured to filter, for example ignore, variations of the sensor signal *S0* corresponding to variations detected by the sensor having a shorter duration than a predetermined minimum time interval. In other words, transitions of the body, such as the rod 74 or the magnet 863, in the monitoring region, such as the monitoring regions 90 or 120, of the sensor 20 having a greater speed than a maximum limit speed (dual of the predetermined minimum time interval) are not assessed.

Preferably, after the generation of non-null second signal *S2,* i.e. comprising the first or the second train of pulses *st1* and *st2,* the processing unit 33 is configured to generate a non-null second signal at each successive detection of a failure in crossing the warning threshold *Thw* or the alarm threshold *Tha* in the signal *S0*.

Advantageously, the transducer 10 according to embodiments of the present invention, the control circuit 30 generates the second signal *S0* having an associated energy which is lower than a predetermined energy threshold value. In particular, the energy associated with the second signal S2 substantially is lower than an energy associated with the first signal S1. Thereby, it is possible to ensure that the transducer 10 does not cause spurious excitations in load components (not shown, for example light sources, inductors, switches, relays, etc.) connected to the output terminal 40 in place of, or in series to, the control unit. This is particularly advantageous in the case of hydraulic cylinders 70 and 80 installed in systems (for example, a machine) comprising a simple and/or analogue control circuit, or in the case of a transducer 10 mounted in an old system (retrofitting in jargon) replacing a preceding transducer or transducer added to the system. Indeed, in circuits without the control unit, the output terminal 40 of the sensor 20 typically is connected to a light source, for example a lamp, and/or to an inductive/capacitive load, such as a relay or a switch.

For example, the processing unit 33 is configured to generate the second signal S2 having such an associated energy as not to cause a spurious excitement of one or more load components coupled to the output terminal (for example, turning on a light source or closing a relay). In particular, the energy associated with the trains of pulses *st1* and *st2* comprised in the second signal S2 is lower than an excitement value. If the second signal comprises repetitions of the trains of pulses *st1* and *st2,* the sum of the energies associated with each train of pulses *st1* and *st2* comprised in a same portion with a low value of the first signal *S0* is lower than the excitement value.

To this end, in one embodiment, the processing unit 33 is configured to generate pulses of the train of pulses *st1* or *st2* associated with a very low energy. For example, the processing unit 33 is configured to generate each pulse with a low duty cycle D, for example lower than, or equal to, 0.2 (that is D ≤ 0.2). In other words, a pulse period *T11* or *T22,* that is the distance between the leading edges of two consecutive pulses in the trains of pulses *st1* and *st2,* respectively, substantially is greater than a duration *t21* or *t22* of the pulse (for example, *T21*/*T22* = 5 x *t21*/*t22).* Differently, a lower limit of the ratio between duration *t21* and *t22* and period *T21* and *T22,* respectively, of the pulse is given by the sensitivity of the control unit which can be coupled to the output terminal 40 of the transducer. In other words, the second signal S2 must comprise pulses which can be detected by the control unit coupled to the output terminal 40.

The transducer 10.1 or 10.2 coupled to the hydraulic cylinder 70 or 80, respectively, is particularly suitable for being engaged in a machine (not shown), for example in a vehicle, a farm machine, an afforestation machine, an earth handling machine and/or fork-lift trucks.

The invention thus conceived is susceptible to several modifications and variations, all falling within the scope of the inventive concept.

For example, nothing prevents from configuring the processing unit to identify and signal (for example with a respective train of pulses) a reaching or non-reaching of further threshold values in the signal *S0*.

In particular, it can be noted that the processing unit 33 may be configured to generate the second signal *S2* during a control period, for example at the turning on of the sensor or at the end of the movement of the body monitored by the sensor 20 (for example, once the predetermined time interval from the detection of a last variation has lapsed), in addition to in real time in a continuous and/or periodic manner.

Moreover, all the details can be replaced by other technically equivalent elements.

For example, the signals in alternative embodiments, in particular the aggregate signal *Sₒᵤₜ* may be electromagnetic signals different from an electric signal, such as a radiofrequency signal or an optical signal.

Again, in alternative embodiments, the signals may have different trends over time, for example mutual trends over time, to the ones illustrated and described in the example embodiments considered.

Practically, any materials and also any contingent shapes and sizes may be used, depending on the needs, without departing from the scope of protection of the following claims.

## Claims

1. A hydraulic cylinder (70; 80) comprising a cylinder (72; 82), a piston (76, 86), a rod (74; 84) rigidly coupled to the piston (76, 86), and a transducer (10.1; 10.2), wherein the transducer (10.1; 10.2) is adapted to detect the variation of a physical quantity associated with a movement of the coupled rod (74; 84) and piston (76; 86), wherein the transducer (10; 10.1; 10.2) comprises a sensor (20), a control circuit (30) and an output terminal (40), the control circuit (30) being operatively connected both to the sensor (20) and to the output terminal (40), the sensor (20) being adapted for detecting a variation of said physical quantity induced by a movement of the rod and piston within a monitoring region (90; 120) of the sensor (20) and for measuring said physical quantity, and the control circuit (30) being adapted for generating a first signal indicative of a detection duration of said variation and a second signal indicative of the measurement of said physical quantity, and wherein the control circuit (30) is adapted for combining the first signal and the second signal into an aggregate signal providing information on the movement of the rod and piston and at the same time information concerning a wear of the rod and/or the piston and for transmitting said aggregate signal through the output terminal (40).

2. The hydraulic cylinder (70; 80) according to claim 1, wherein the control circuit (30) is adapted for generating the first signal which is variable between a first value associated with the detection of the variation of the physical quantity and a second value associated with the non-detection of the variation thereof, and wherein the control circuit (30) is adapted for combining the second signal with the first signal at the second value.

3. The hydraulic cylinder (70; 80) according to any one of the preceding claims, wherein the control circuit (30) is adapted for generating the second signal comprising a predetermined sequence of pulses.

4. The hydraulic cylinder (70; 80) according to claim 3, wherein the control circuit (30) is adapted for generating the second signal with the sequence of pulses indicative of the measuring of a predetermined value of the physical quantity.

5. The hydraulic cylinder (70; 80) according to claim 3 or 4, wherein the control circuit (30) is adapted for generating the second signal comprising two or more repetitions of the sequence of pulses.

6. The hydraulic cylinder (70; 80) according to any one of the preceding claims, wherein the control circuit (30) is adapted for generating the second signal having an associated energy which is lower than a predetermined threshold value.

7. The hydraulic cylinder (70; 80) according to any one of the preceding claims, wherein the sensor (20) comprises one between an optical sensor and a magnetometer.

8. The hydraulic cylinder (70) according to claim 1, wherein the transducer (10.1) comprises an optical sensor (20) and the rod (74) comprises a first portion (747) having a first reflectivity and a second portion (748) having a second reflectivity, wherein the optical sensor (20) is adapted for detecting the variation of light intensity reflected by the movable rod (74) within the monitoring region (90) of the sensor (20), and wherein the control circuit (30) is adapted for generating the first signal indicative of the movement of the rod (74) and for generating the second signal indicative of a state of wear of the rod (74).

9. The hydraulic cylinder (80) according to claim 1, wherein the transducer (10.2) comprises a magnetometer (20) and the piston (86) comprises a magnet (863), wherein the magnetometer (20) is adapted for detecting the variation of magnetic field intensity induced by the movement of the magnet (863) within the monitoring region (120) of the sensor (20), and wherein the control circuit (30) is adapted for generating the first signal indicative of the movement of the piston (86) and for generating the second signal indicative of a state of wear of the magnet (863).

10. A machine comprising the hydraulic cylinder (70; 80) according to any of the preceding claims.

## Patentansprüche

1. Hydraulikzylinder (70; 80), umfassend einen Zylinder (72; 82), einen Kolben (76, 86), eine Stange (74; 84), die starr mit dem Kolben (76, 86) gekoppelt ist, und einen Messgeber (10.1; 10.2), wobei der Messgeber (10.1; 10.2) angepasst ist, um die Variation einer physikalischen Größe zu erfassen, die mit einer Bewegung der gekoppelten Stange (74; 84) und des Kolbens (76; 86) assoziiert ist, wobei der Messgeber (10; 10.1; 10.2) einen Sensor (20), eine Steuerschaltung (30) und einen Ausgangsanschluss (40) umfasst, wobei die Steuerschaltung (30) funktionsfähig sowohl mit dem Sensor (20) als auch mit dem Ausgangsanschluss (40) verbunden ist, wobei der Sensor (20) angepasst ist, um eine Variation der physikalischen Größe zu erfassen, die durch eine Bewegung der Stange und des Kolbens innerhalb eines Überwachungsbereichs (90; 120) des Sensors (20) induziert wird, und um die physikalische Größe zu messen, und wobei die Steuerschaltung (30) angepasst ist, um ein erstes Signal, das indikativ für eine Erfassungsdauer der Variation ist, und ein zweites Signal, das indikativ für die Messung der physikalischen Größe ist, zu erzeugen, und wobei die Steuerschaltung (30) angepasst ist, um das erste Signal und das zweite Signal zu einem Gesamtsignal zu kombinieren, das Informationen über die Bewegung der Stange und des Kolbens und gleichzeitig Informationen über einen Verschleiß der Stange und/oder des Kolbens bereitstellt, und um das Gesamtsignal über den Ausgangsanschluss (40) zu übertragen.

2. Hydraulikzylinder (70; 80) nach Anspruch 1, wobei die Steuerschaltung (30) angepasst ist, um das erste Signal zu erzeugen, das zwischen einem ersten Wert, der mit der Erfassung der Variation der physikalischen Größe assoziiert ist, und einem zweiten Wert, der mit der Nichterfassung der Variation davon assoziiert ist, und wobei die Steuerschaltung (30) angepasst ist, um das zweite Signal mit dem ersten Signal auf dem zweiten Wert zu kombinieren.

3. Hydraulikzylinder (70; 80) nach einem der vorherigen Ansprüche, wobei die Steuerschaltung (30) angepasst ist, um das zweite Signal umfassend eine vorbestimmte Impulsfolge zu erzeugen.

4. Hydraulikzylinder (70; 80) nach Anspruch 3, wobei die Steuerschaltung (30) angepasst ist, um das zweite Signal mit der Impulsfolge zu erzeugen, die indikativ für die Messung eines vorbestimmten Werts der physikalischen Größe ist.

5. Hydraulikzylinder (70; 80) nach Anspruch 3 oder 4, wobei die Steuerschaltung (30) angepasst ist, um das zweite Signal umfassend zwei oder mehrere Wiederholungen der Impulsfolge zu erzeugen.

6. Hydraulikzylinder (70; 80) nach einem der vorherigen Ansprüche, wobei die Steuerschaltung (30) angepasst ist, um das zweite Signal zu erzeugen, das eine assoziierte Energie aufweist, die niedriger ist als ein vorbestimmter Schwellenwert.

7. Hydraulikzylinder (70; 80) nach einem der vorherigen Ansprüche, wobei der Sensor (20) eines zwischen einem optischen Sensor und einem Magnetometer umfasst.

8. Hydraulikzylinder (70) nach Anspruch 1, wobei der Messgeber (10.1) einen optischen Sensor (20) umfasst und die Stange (74) einen ersten Abschnitt (747), der eine erste Reflektivität aufweist und einen zweiten Abschnitt (748), der eine zweite Reflektivität aufweist, umfasst, wobei der optische Sensor (20) angepasst ist, um die Variation der von der beweglichen Stange (74) reflektierten Lichtintensität innerhalb des Überwachungsbereichs (90) des Sensors (20) zu erfassen, und wobei die Steuerschaltung (30) angepasst ist, um das erste Signal zu erzeugen, das indikativ für die Bewegung der Stange (74) ist, und um das zweite Signal zu erzeugen, das indikativ für einen Verschleißzustand der Stange (74) ist.

9. Hydraulikzylinder (80) nach Anspruch 1, wobei der Messgeber (10.2) ein Magnetometer (20) umfasst und der Kolben (86) einen Magneten (863) umfasst, wobei das Magnetometer (20) angepasst ist, um die durch die Bewegung des Magneten (863) induzierte Variation der Magnetfeldstärke innerhalb des Überwachungsbereichs (120) des Sensors (20) zu erfassen, und wobei die Steuerschaltung (30) angepasst ist, um das erste Signal zu erzeugen, das indikativ für die Bewegung des Kolbens (86) ist, und um das zweite Signal zu erzeugen, das indikativ für einen Verschleißzustand des Magneten (863) ist.

10. Maschine, umfassend den Hydraulikzylinder (70; 80) nach einem der vorherigen Ansprüche.

## Revendications

1. Cylindre hydraulique (70 ; 80) comprenant un cylindre (72 ; 82), un piston (76 ; 86), une tige (74 ; 84) couplée de manière rigide au piston (76 ; 86), et un transducteur (10.1 ; 10.2), dans lequel le transducteur (10.1 ; 10.2) est apte à détecter la variation d'une quantité physique associée à un mouvement de la tige (74; 84) et du piston (76; 86) couplés, dans lequel le transducteur (10; 10.1; 10.2) comprend un capteur (20), un circuit de contrôle (30) et une borne de sortie (40), le circuit de contrôle (30) étant opérationnellement connecté à la fois au capteur (20) et à la borne de sortie (40), le capteur (20) étant adapté à la détection d'une variation de ladite quantité physique induite par un mouvement de la tige et du piston dans une zone de contrôle (90 ; 120) du capteur (20) et à la mesure de ladite quantité, et le circuit de contrôle (30) étant adapté à la génération d'un premier signal indicatif d'une durée de détection de ladite variation et d'un second signal indicatif de la mesure de ladite quantité physique; dans lequel le circuit de contrôle (30) est adapté à la combinaison du premier signal et du second signal en un signal cumulé fournissant des informations sur le mouvement de la tige et du piston, et dans un même temps, des informations concernant une usure de la tige et/ou du piston et la transmission dudit signal cumulé via la borne de sortie (40).

2. Cylindre hydraulique (70 ; 80) selon la revendication 1, dans lequel le circuit de contrôle (30) est adapté à la génération du premier signal, qui est variable entre une première valeur associée à la détection de la variation de la quantité physique et une seconde valeur associée à la non-détection de la variation de celle-ci, et dans lequel le circuit de contrôle (30) est adapté à la combinaison du second signal avec le premier signal à la seconde valeur.

3. Cylindre hydraulique (70 ; 80) selon l'une quelconque des revendications antérieures, dans lequel le circuit de contrôle (30) est adapté à la génération du second signal comprenant une séquence prédéterminée d'impulsions.

4. Cylindre hydraulique (70 ; 80) selon la revendication 3, dans lequel le circuit de contrôle (30) est adapté à la génération du second signal avec la séquence d'impulsions indicative de la mesure d'une valeur prédéterminée de la quantité physique.

5. Cylindre hydraulique (70 ; 80) selon les revendications 3 et 4, dans lequel le circuit de contrôle (30) est adapté à la génération du second signal comprenant deux répétitions ou plus de la séquence d'impulsions.

6. Cylindre hydraulique (70 ; 80) selon l'une quelconque des revendications précédentes, dans lequel le circuit de contrôle (30) est adapté à la génération du second signal, présentant une énergie associée inférieure à une valeur de seuil prédéterminée.

7. Cylindre hydraulique (70 ; 80) selon l'une quelconque des revendications précédentes, dans lequel le capteur (20) comprend un entre un capteur optique et un magnétomètre.

8. Cylindre hydraulique (70) selon la revendication 1, dans lequel le transducteur (10.1) comprend un capteur optique (20) et la tige (74) comprend une première portion (747) disposant d'une première réflectivité et une deuxième portion (748) disposant d'une second réflectivité, dans lequel le capteur optique (20) est adapté à la détection de la variation de l'intensité lumineuse reflétée par la tige amovible (74) dans la zone de contrôle (90) du capteur (20), et dans laquelle le circuit de contrôle (30) est adapté à la génération du premier signal indicatif du mouvement de la tige (74) et à la génération du second signal indicatif de l'état d'usure de la tige (74).

9. Cylindre hydraulique (80) selon la revendication 1, dans lequel le transducteur (10.2) comprend un magnétomètre (20) et le piston (86) comprend un aimant (863), dans lequel le magnétomètre (20) est adapté à la détection de la variation de l'intensité du champ magnétique induite par le mouvement de l'aimant (863) dans la zone de contrôle (120) du capteur (20), et dans lequel le circuit de contrôle (30) est adapté à la génération du premier signal indicatif du mouvement du piston (86) et à la génération du second signal indicatif d'un état d'usure de l'aimant (863).

10. Machine comprenant le cylindre hydraulique (70; 80) selon l'une quelconque des revendications précédentes.
